# EUROPEAN PATENT APPLICATION

(11) **EP 4 120 524 A1**
(43) Date of publication of application: **18.01.2023**
(21) Application number: 21767821.8
(22) Date of filing: 12.03.2021
(51) Int. Cl.: H02K 15/04, B23K 26/21

(54) **METHOD FOR MANUFACTURING STATOR FOR ROTARY ELECTRIC MACHINE**

(30) Priority: 12.03.2020 JP 2020042982
(71) Applicant: AISIN CORPORATION, Kariya-shi, Aichi 448-8650 (JP); TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: USHIDA, Hideharu, Anjo-shi, Aichi 444-1192 (JP); ONO, Hiroyuki, Anjo-shi, Aichi 444-1192 (JP); ENOHATA, Kei, Anjo-shi, Aichi 444-1192 (JP); TANG, Fei, Toyota-shi, Aichi 471-8571 (JP); NAKAMURA, Masaya, Kariya-shi, Aichi 448-8661 (JP); NISHIDA, Masanari, Kariya-shi, Aichi 448-8661 (JP); SUGIMOTO, Tetsuya, Toyota-shi, Aichi 471-8571 (JP)
(74) Representative: TBK
(86) International application number: PCT/JP2021/010222
(87) International publication number: WO 2021/182636

(57) **Abstract**

There is disclosed a method for manufacturing a stator for a rotary electric machine including: a process of abutting, on each other, tip end parts (40 of one coil piece (52) and an other one coil piece (52) for forming a stator coil (24) of a rotary electric machine (1); and a welding process of irradiating a welding target location regarding the tip end part having been abutted with a laser beam (110) having a wavelength of 0.6 µm or less, in which in the welding process, the laser beam is generated for every pulse oscillation in a laser oscillator in a mode of having a laser output of 3.0 kW or more, and in at least a part of a period during one pulse oscillation, the laser beam is moved so that an irradiation position changes linearly parallel to an abutment surface (401) of the tip end part.

## Description

### TECHNICAL FIELD

The present disclosure relates to a method for manufacturing a stator for a rotary electric machine.

### BACKGROUND ART

A method for manufacturing a stator is known in which a tip end part of one coil piece for forming a stator coil of a rotary electric machine and a tip end part of an other one coil piece are abutted on each other, and a welding target location related to the abutted tip end part is irradiated with a laser beam in such a mode that an irradiation position moves in a loop shape (see, for example, Patent Literature 1).

### CITATIONS LIST

### PATENT LITERATURE

Patent Literature 1: JP 2018-20340 A
Patent Literature 2: JP 2007-229725 A

### SUMMARY OF INVENTION

### TECHNICAL PROBLEMS

However, in the conventional technique as described in Patent Literature 1 described above, due to use of an infrared laser (fiber laser), a relatively large amount of heat input is required in order to obtain a necessary joining area between coil pieces, and there is a possibility that the thermal influence is large and welding becomes unstable.

Therefore, a necessary joining area between coil pieces is secured with a relatively small amount of heat input.

### SOLUTIONS TO PROBLEMS

In an aspect, there is provided a method for manufacturing a stator for a rotary electric machine including:
a process of abutting, on each other, tip end parts of one coil piece and an other one coil piece for forming a stator coil of a rotary electric machine; and
a welding process of irradiating a welding target location regarding the tip end part having been abutted with a laser beam having a wavelength of 0.6 µm or less,
in which in the welding process, the laser beam is generated for every pulse oscillation in a laser oscillator in a mode of having a laser output of 3.0 kW or more, and
in at least a part of a period during one pulse oscillation, the laser beam is moved so that an irradiation position changes linearly parallel to an abutment surface of the tip end part.

### ADVANTAGEOUS EFFECTS OF INVENTION

According to the present disclosure, it is possible to secure a necessary joining area between coil pieces with a relatively small amount of heat input.

### BRIEF DESCRIPTION OF DRAWINGS

FIG. 1 is a cross-sectional view schematically showing a cross-sectional structure of a motor according to an example.
FIG. 2 is a plan view of a stator core in a single state.
FIG. 3 is a view schematically showing a pair of coil pieces assembled to the stator core.
FIG. 4 is a perspective view of a periphery of a coil end of a stator.
FIG. 5 is a perspective view showing an excerption of a part of an in-phase coil piece.
FIG. 6 is a schematic front view of one coil piece.
FIG. 7 is a view showing tip end parts of coil pieces joined to each other and a vicinity thereof.
FIG. 8 is a cross-sectional view taken along line A-A of FIG. 7 passing through the welding target location.
FIG. 9 is a diagram showing a relationship between a laser wavelength and a laser absorption rate for each individual of various materials.
FIG. 10 is an explanatory diagram of a change mode of an absorption rate during welding.
FIG. 11A is an illustration of a keyhole and the like in a case of using a green laser.
FIG. 11B is an illustration of a keyhole and the like in a case of using an infrared laser.
FIG. 12A is a diagram showing a relationship between laser output and welding depth in a case of a green laser.
FIG. 12B is a diagram showing a relationship between laser output and welding depth in a case of a green laser.
FIG. 13 is an explanatory diagram of a method for welding using a green laser according to the present example.
FIG. 14 is an explanatory diagram schematically showing a change characteristic (irradiation mode without downslope) of laser output and welding heat input in accordance with an irradiation position.
FIG. 15 is an explanatory diagram of a change mode of an irradiation position for each pass.
FIG. 16 is an explanatory diagram schematically showing a change characteristic (irradiation mode with downslope) of laser output and welding heat input in accordance with an irradiation position.
FIG. 17 is an explanatory diagram in a case where welding is achieved by two passes having the same welding direction.
FIG. 18 is an explanatory diagram in a case where welding is achieved by two passes having different welding directions.
FIG. 19 is an explanatory diagram of a protrusion and the like caused by volume expansion.
FIG. 20 is an explanatory diagram of a method for welding capable of reducing a protrusion and a blowhole.
FIG. 21 is a diagram showing a cross section of a welded portion when welding is achieved by the two passes shown in FIG. 20.
FIG. 22 is an explanatory diagram of another method for welding capable of reducing a protrusion and a blowhole.
FIG. 23 is an explanatory diagram of another method for welding capable of reducing a protrusion and a blowhole.
FIG. 24A is an explanatory diagram of a method for welding using a green laser according to a comparative example.
FIG. 24B is a diagram showing a cross section of a welded portion when welding is achieved by a comparative example.
FIG. 25 is a flowchart schematically showing a flow of manufacturing a stator.
FIG. 26 is a diagram showing a measurement result of a temperature history at the time of welding by a green laser.
FIG. 27 is an explanatory diagram of a test for verifying foreign matter resistance.

### DESCRIPTION OF EMBODIMENTS

Each example will be described in detail below with reference to the accompanying drawings. In the present description, "predetermined" is used to mean "defined in advance".

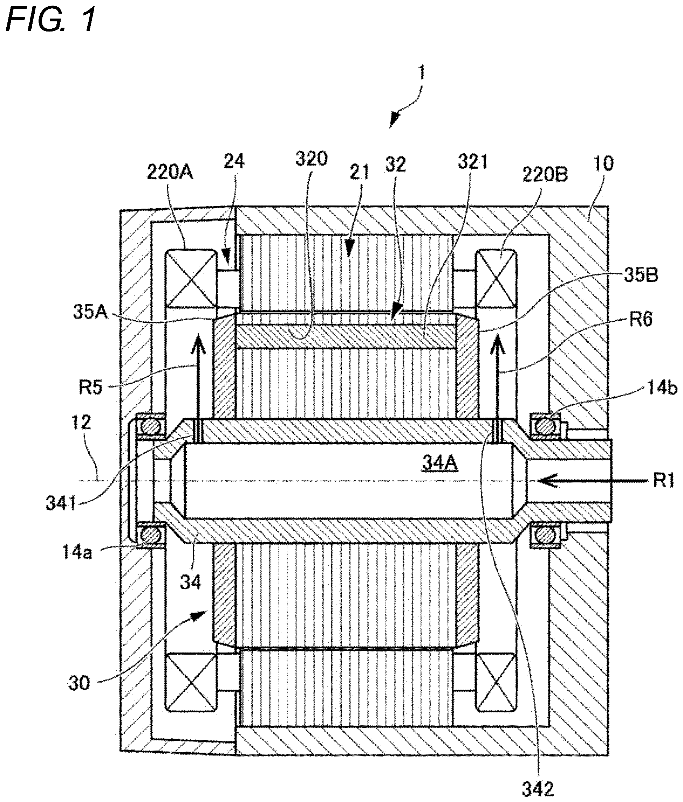

FIG. 1 is a cross-sectional view schematically showing a cross-sectional structure of a motor 1 (an example of a rotary electric machine) according to an example.

FIG. 1 illustrates a rotation axis 12 of the motor 1. In the following description, the axial direction refers to a direction in which the rotation axis (rotation center) 12 of the motor 1 extends, and the radial direction refers to a radial direction about the rotation axis 12. Therefore, the radially outside refers to a side away from the rotation axis 12, and the radially inside refers to a side toward the rotation axis 12. The circumferential direction corresponds to a rotation direction around the rotation axis 12.

The motor 1 may be, for example, a vehicle driving motor used in a hybrid vehicle or an electric vehicle. However, the motor 1 may be used for any other application.

The motor 1 is an inner rotor type, and is provided such that a stator 21 surrounds the radially outside of a rotor 30. A radially outside of the stator 21 is fixed to a motor housing 10.

The rotor 30 is disposed radially inside the stator 21. The rotor 30 includes a rotor core 32 and a rotor shaft 34. The rotor core 32 is fixed to radially outside the rotor shaft 34 and rotates integrally with the rotor shaft 34. The rotor shaft 34 is rotatably supported by the motor housing 10 via bearings 14a and 14b. The rotor shaft 34 defines the rotation axis 12 of the motor 1.

The rotor core 32 is formed of, for example, an annular magnetic lamination steel plate. A permanent magnet 321 is inserted into the rotor core 32. The number, arrangement, and the like of the permanent magnets 321 are arbitrary. In a modification, the rotor core 32 may be formed of a green compact in which a magnetic powder is compressed and solidified.

End plates 35A and 35B are attached to both axial sides of the rotor core 32. The end plates 35A and 35B may have an adjustment function of an imbalance of the rotor 30 (a function of eliminating the imbalance by cutting or the like) in addition to a support function of supporting the rotor core 32.

As shown in FIG. 1, the rotor shaft 34 has a hollow part 34A. The hollow part 34A extends over the entire length in the axial direction of the rotor shaft 34. The hollow part 34A may function as an oil passage. For example, as indicated by arrow R1 in FIG. 1, oil is supplied to the hollow part 34A from one end side in the axial direction, and the oil flows along the radially inside surface of the rotor shaft 34, whereby the rotor core 32 can be cooled from the radially inside. The oil flowing along the radially inside surface of the rotor shaft 34 may be ejected (arrows R5 and R6) radially outward through oil holes 341 and 342 formed at both end parts of the rotor shaft 34, for use in cooling coil ends 220A and 220B.

Although FIG. 1 shows the motor 1 having a specific structure, the structure of the motor 1 is arbitrary as long as the motor 1 includes a stator coil 24 (described later) joined by welding. Therefore, for example, the rotor shaft 34 needs not have the hollow part 34A, or may have a hollow part having a significantly smaller in inner diameter than the hollow part 34A. Although a specific method of cooling is disclosed in FIG. 1, the method of cooling the motor 1 is arbitrary. Therefore, for example, an oil introduction pipe inserted to be into the hollow part 34A may be provided, or oil may be dropped from the oil passage in the motor housing 10 toward the coil ends 220A and 220B from the radial outside.

Although the rotor 30 is the inner rotor type motor 1 arranged inside the stator 21 in FIG. 1, the present invention may be applied to a motor of another form. For example, the present invention may be applied to an outer rotor type motor in which the rotor 30 is concentrically arranged on the outside of the stator 21, a dual rotor type motor in which the rotor 30 is arranged on both the outside and the inside of the stator 21, and the like.

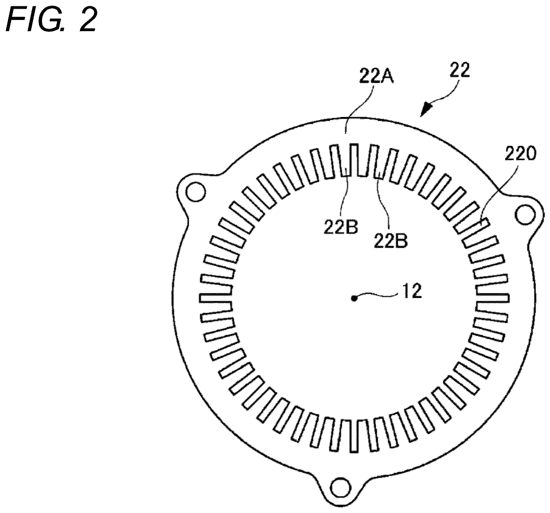

Next, the configuration related to the stator 21 will be described in detail with reference to FIG. 2 and subsequent drawings.

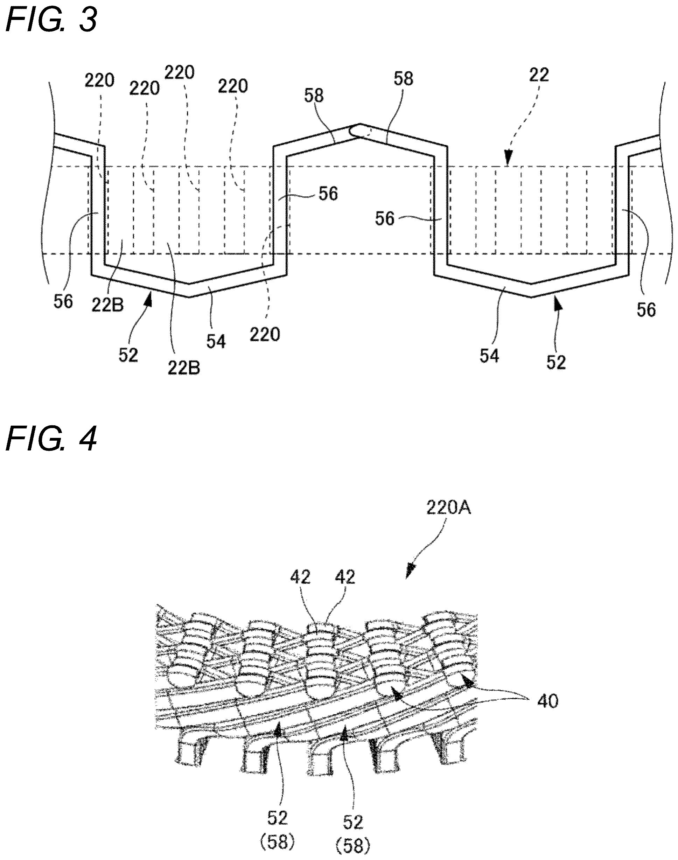

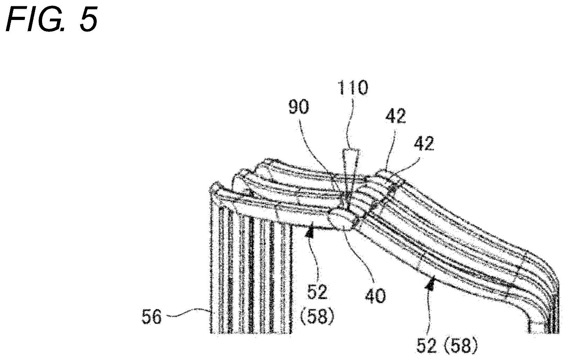

FIG. 2 is a plan view of a stator core 22 in a single state. FIG. 3 is a view schematically showing a pair of coil pieces 52 assembled to the stator core 22. FIG. 3 shows a relationship between the pair of coil pieces 52 and a slot 220 in a state where the radially inside of the stator core 22 is developed. In FIG. 3, the stator core 22 is indicated by a dotted line, and a part of the slot 220 is not illustrated. FIG. 4 is a perspective view of the periphery of the coil end 220A of the stator 21. FIG. 5 is a perspective view showing an excerption of a part of an in-phase coil piece.

The stator 21 includes the stator core 22 and the stator coil 24.

The stator core 22 is formed of, for example, an annular magnetic lamination steel plate, but in the modification, the stator core 22 may be formed of a green compact in which a magnetic powder is compressed and solidified. Note that the stator core 22 may be formed by split cores split in the circumferential direction, or may be in a form not split in the circumferential direction. A plurality of the slots 220 around which the stator coil 24 is wound is formed on the radially inside of the stator core 22. Specifically, as shown in FIG. 2, the stator core 22 includes an annular back yoke 22A and a plurality of teeth 22B extending radially inward from the back yoke 22A, and the slot 220 is formed between the plurality of teeth 22B in the circumferential direction. The number of slots 220 is arbitrary, but is 48 as an example in the present example.

The stator coil 24 includes a U-phase coil, a V-phase coil, and a W-phase coil (hereinafter, referred to as "phase coil" when U, V, and W are not distinguished). A base end of each phase coil is connected to an input terminal (not illustrated), and a terminal end of each phase coil is connected to the terminal end of another phase coil to form a neutral point of the motor 1. That is, the stator coil 24 is star-connected. However, the connection mode of the stator coil 24 may be appropriately changed according to required motor characteristics and the like, and for example, the stator coil 24 may be delta-connected instead of star-connection.

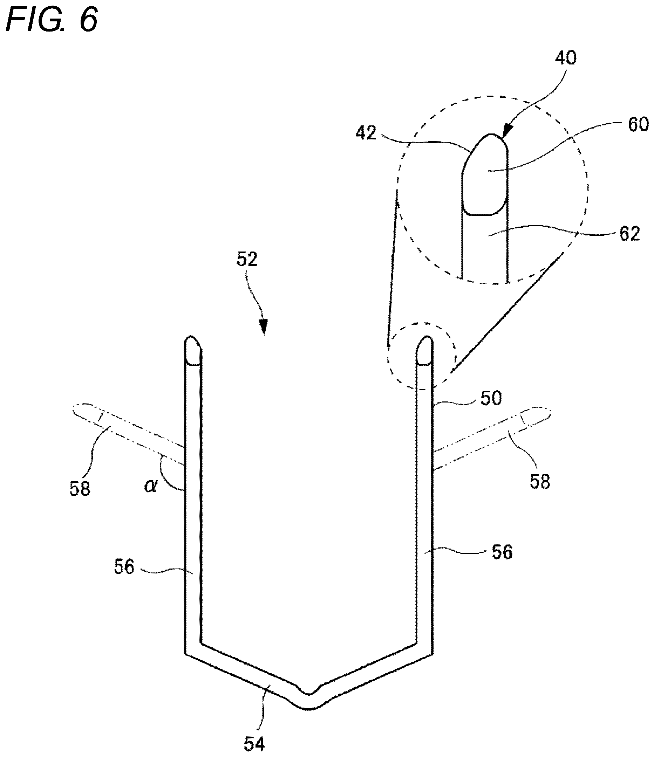

Each phase coil is configured by joining a plurality of the coil pieces 52. FIG. 6 is a schematic front view of one coil piece 52. The coil piece 52 is in the form of a segment coil in which the phase coil is divided into units that are easy to assemble (e.g., units to be inserted into two slots 220). The coil piece 52 is formed by coating a linear conductor (rectangular wire) 60 having a substantially rectangular cross section with an insulating film 62. In the present example, the linear conductor 60 is formed of copper, for example. However, in the modification, the linear conductor 60 may be formed of another conductor material such as iron.

In a stage before being assembled to the stator core 22, the coil piece 52 may be shaped into substantially U shape having a pair of straight parts 50 and a coupling part 54 that couples the pair of straight parts 50. When the coil piece 52 is assembled to the stator core 22, the pair of straight parts 50 are each inserted into the slot 220 (see FIG. 3). Due to this, as shown in FIG. 3, the coupling part 54 extends in the circumferential direction so as to straddle the plurality of teeth 22B (and the plurality of slots 220 accordingly) on the other axial end side of the stator core 22. The number of the slots 220 straddled by the coupling part 54 is arbitrary, but is 3 in FIG. 3. After being inserted into the slot 220, the straight part 50 is bent in the circumferential direction in the middle as indicated by a two-dot chain line in FIG. 6. Due to this, the straight part 50 becomes a leg part 56 extending in the axial direction in the slot 220 and a transfer part 58 extending in the circumferential direction on one axial end side of the stator core 22.

In FIG. 6, the pair of straight parts 50 are bent in directions away from each other, but the present invention is not limited thereto. For example, the pair of straight parts 50 may be bent in directions approaching each other. The stator coil 24 sometimes has also a neutral point coil piece or the like for coupling terminal ends of three-phase coils to form a neutral point.

A plurality of the leg parts 56 of the coil piece 52 shown in FIG. 6 are inserted into one slot 220 side by side in the radial direction. Therefore, a plurality of the transfer parts 58 extending in the circumferential direction are arranged side by side in the radial direction on one axial end side of the stator core 22. As shown in FIGS. 3 and 5, the transfer part 58 of one coil piece 52 that protrudes from one slot 220 and extends on a circumferential first side (e.g., clockwise orientation) is joined to the transfer part 58 of an other one coil piece 52 that protrudes from another slot 220 and extends on a circumferential second side (e.g., anticlockwise direction).

In the present example, as an example, six coil pieces 52 are assembled to one slot 220. Hereinafter, a first turn, a second turn, and a third turn are also referred to in order from the outermost coil piece 52 in the radial direction. In this case, the tip end parts 40 of the coil piece 52 of the first turn and the coil piece 52 of the second turn are joined to each other by the joining process described later, the tip end parts 40 of the coil piece 52 of the third turn and the coil piece 52 of a fourth turn are joined to each other by the joining process described later, and the tip end parts 40 of the coil piece 52 of a fifth turn and the coil piece 52 of a sixth turn are joined to each other by the joining process described later.

Here, the coil piece 52 is covered with the insulating film 62 as described above, but the insulating film 62 is removed only at the tip end part 40. This is to ensure electrical connection with the other coil piece 52 at the tip end part 40. As shown in FIGS. 5 and 6, of the tip end part 40 of the coil piece 52, an axially outside end surface 42, i.e., one end surface in a width direction of the coil piece 52 is finally an arc surface protruding outward in the axial direction.

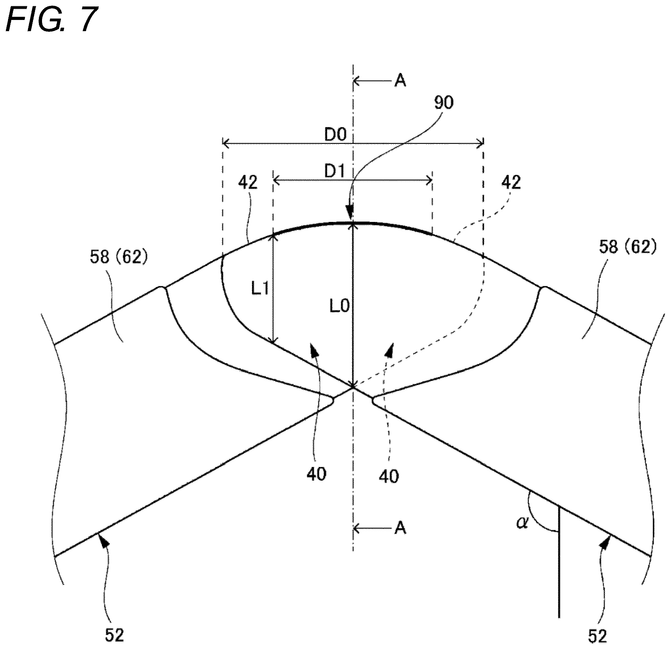

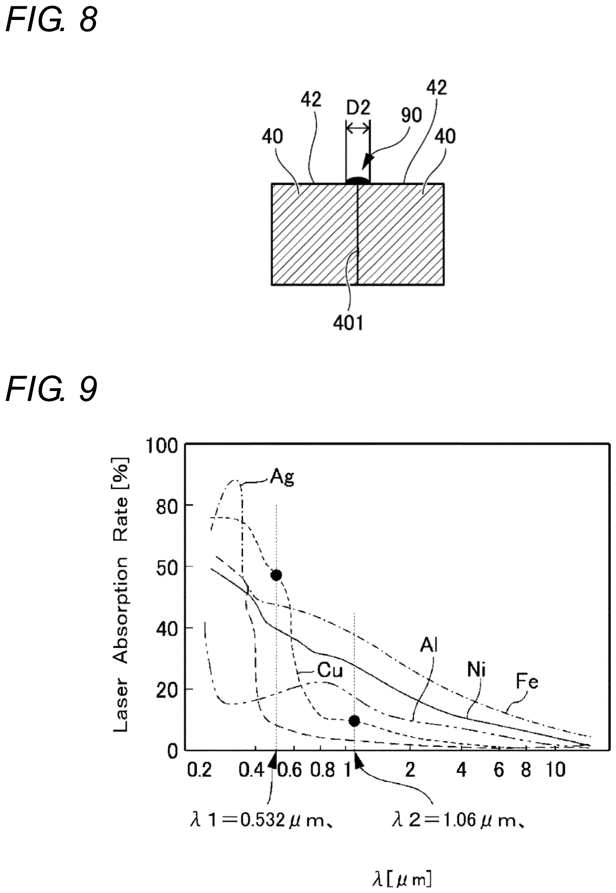

FIG. 7 is a view showing the tip end parts 40 of the coil pieces 52 joined to each other and the vicinity thereof. FIG. 7 schematically shows a circumferential range D1 of a welding target location 90. FIG. 8 is a cross-sectional view taken along line A-A of FIG. 7 passing through the welding target location 90.

When the tip end part 40 of the coil piece 52 is joined, one coil piece 52 and the other one coil piece 52 are abutted in such a mode that the respective tip end parts 40 form a C shape in the view shown in FIG. 7 (as viewed in a direction perpendicular to an abutment surface 401). At this time, the two tip end parts 40 to be joined to each other may be joined to overlap each other in a thickness direction such that central axes of the arc surfaces (axially outside end surfaces 42) coincide with each other. By thus aligning the central axes to overlap, even when a bending angle α is relatively large or small, the lines on the axial outsides of the two tip end parts 40 to be joined to each other coincide with each other and can be appropriately overlapped.

Here, in the present example, welding is used as a joining method for joining the tip end parts 40 of the coil pieces 52. In the present example, as a method for welding, not arc welding typified by TIG welding but laser welding using a laser beam source as a heat source is adopted. By using laser welding instead of TIG welding, it is possible to reduce the axial lengths of the coil ends 220A and 220B. That is, in the case of TIG welding, it is necessary to bend the tip end parts of the coil pieces to be abutted on each other to the axial outside and extend the tip end parts in the axial direction, whereas in the case of laser welding, there is no need to bend the tip end parts in the axial direction, and as shown in FIG. 7, welding can be achieved in a state where the tip end parts 40 of the coil pieces 52 to be abutted on each other extend in the circumferential direction. This allows the axial lengths of the coil ends 220A and 220B to be reduced as compared with the case where the tip end parts 40 of the coil pieces 52 to be abutted on each other are bent axially outward and extend in the axial direction.

In the laser welding, as schematically shown in FIG. 5, a laser beam 110 for welding is applied to the welding target location 90 in the abutted two tip end parts 40. Note that the irradiation direction (propagation direction) of the laser beam 110 is substantially parallel to the axial direction, and is a direction directed from the axially outside to the axially outside end surfaces 42 of the abutted two tip end parts 40. In the case of the laser welding, since heating can be performed locally, only the tip end part 40 and the vicinity thereof can be heated, and damage (carbonization) and the like of the insulating film 62 can be effectively reduced. As a result, it is possible to electrically connect the plurality of coil pieces 52 while maintaining appropriate insulation performance.

As shown in FIG. 7, the circumferential range D1 of the welding target location 90 is a part excluding both ends in an entire circumferential range D0 of the axially outside end surface 42 at the abutment part between the tip end parts 40 of the two coil pieces 52. This is because it is difficult to secure a sufficient welding depth (see dimension L1 in FIG. 7) at both ends due to the convex arc surface of the axially outside end surface 42. The circumferential range D1 of the welding target location 90 may be adapted so as to ensure a necessary joining area between the coil pieces 52, a necessary welding strength, and the like.

As shown in FIG. 8, a radial range D2 of the welding target location 90 is centered on an abutment surface 401 between the tip end parts 40 of the two coil pieces 52. The radial range D2 of the welding target location 90 may correspond to the diameter (beam diameter) of the laser beam 110. That is, the laser beam 110 is irradiated in such a mode that the irradiation position linearly changes along the circumferential direction without substantially changing in the radial direction. In other words, the laser beam 110 is moved so that the irradiation position changes linearly parallel to the abutment surface 401.

FIG. 9 is a diagram showing a relationship between a laser wavelength and a laser absorption rate for each individual of various materials (hereinafter, also simply referred to as "absorption rate"). In FIG. 9, the horizontal axis represents a wavelength λ, and the vertical axis represents the absorption rate, thereby showing characteristics related to individuals of various materials of copper (Cu), aluminum (Al), silver (Ag), nickel (Ni), and iron (Fe).

The infrared laser (laser having a wavelength of 1064 nm) generally used in laser welding has an absorption rate as low as about 10% with respect to copper, which is a material of the linear conductor 60 of the coil piece 52, as indicated by the black circle at the intersection point with the dotted line of λ2 = 1.06 µm in FIG. 9. That is, in the case of the infrared laser, most of the laser beam 110 is reflected on the coil piece 52 and is not absorbed. For this reason, a relatively large amount of heat input is required in order to obtain a necessary joining area between the coil pieces 52 of the joining target, and there is a possibility that the thermal influence is large and welding becomes unstable.

In view of this regard, the present example uses the green laser instead of the infrared laser. The green laser is a concept including not only a laser having a wavelength of 532 nm, i.e., a second harmonic generation (SHG) laser but also a laser having a wavelength close to 532 nm. In the modification, a laser having a wavelength of 0.6 µm or less that does not belong to the category of the green laser may be used. The wavelength related to the green laser is obtained by, for example, converting a basic wavelength generated by a YAG laser or a YVO4 laser through an oxide single crystal (e.g., lithium triborate: LBO).

In the case of the green laser, as indicated by the black circle at the intersection with the dotted line of λ1 = 0.532 µm in FIG. 9, the absorption rate is as high as about 50% with respect to copper, which is a material of the linear conductor 60 of the coil piece 52. Therefore, according to the present example, it is possible to secure a necessary joining area between the coil pieces 52 with a small amount of heat input as compared with the case of using an infrared laser.

Note that the characteristic that the green laser becomes higher in absorption rate than the infrared laser is remarkable in the case of copper as shown in FIG. 9, but is found not only in copper but also in many other metal materials. Therefore, welding with the green laser may be achieved even when the material of the linear conductor 60 of the coil piece 52 is other than copper.

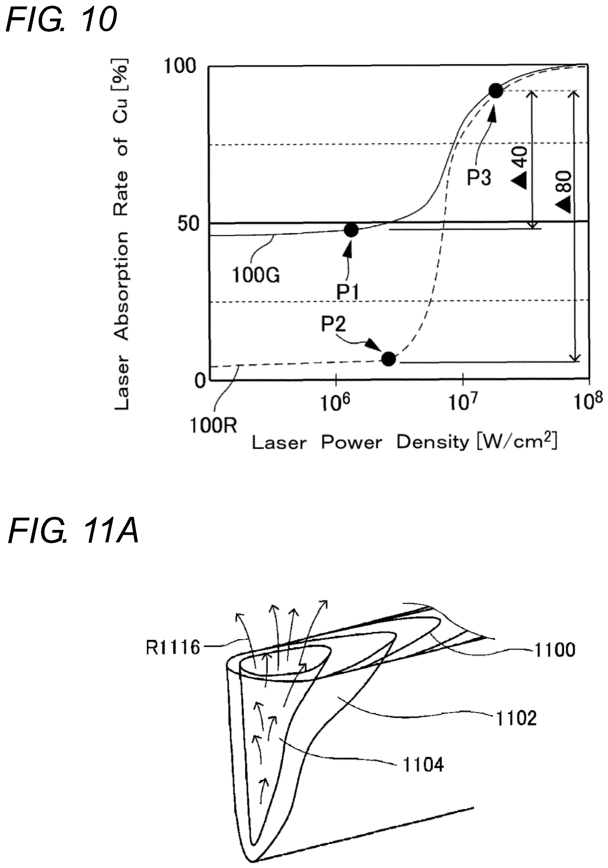

FIG. 10 is an explanatory diagram of a change mode of the absorption rate during welding. In FIG. 10, the horizontal axis represents the laser power density (expressed as "Laser Power Density"), and the vertical axis represents the laser absorption rate of copper (expressed as "Laser Absorption Rate"), thereby showing a characteristic 100G in the case of the green laser and a characteristic 100R in the case of the infrared laser.

FIG. 10 shows points P1 and P2 at which melting of copper starts in the case of the green laser and the case of the infrared laser, and shows a point P3 at which a keyhole is formed. As indicated by the points P1 and P2 in FIG. 10, it is found that, compared with the infrared laser, the green laser can start melting of copper at a lower laser power density. It is found that due to the difference in absorption rate described above, the difference between the absorption rate at the point P3 where the keyhole is formed and the absorption rate at the time of start of irradiation (i.e., the absorption rate when the laser power density is 0) is smaller in the green laser than in the infrared laser. Specifically, in the case of the infrared laser, the change in absorption rate during welding is about 80%, whereas in the case of the green laser, the change in absorption rate during welding is about 40%, which is about half.

Thus, in the case of the infrared laser, the change (drop) in absorption rate during welding is as relatively large as about 80%, and therefore the keyhole becomes unstable, and variations in welding depth and welding width and disturbance of a molten portion(e.g., sputtering or the like) easily occur. On the other hand, in the case of the green laser, the change (drop) in absorption rate during welding is as relatively small as about 40%, and therefore the keyhole is less likely to be unstable, and variations in welding depth and welding width and disturbance of a molten portion (e.g., sputtering or the like) are less likely to occur. Note that sputtering is metal particles or the like scattered by irradiation with a laser or the like.

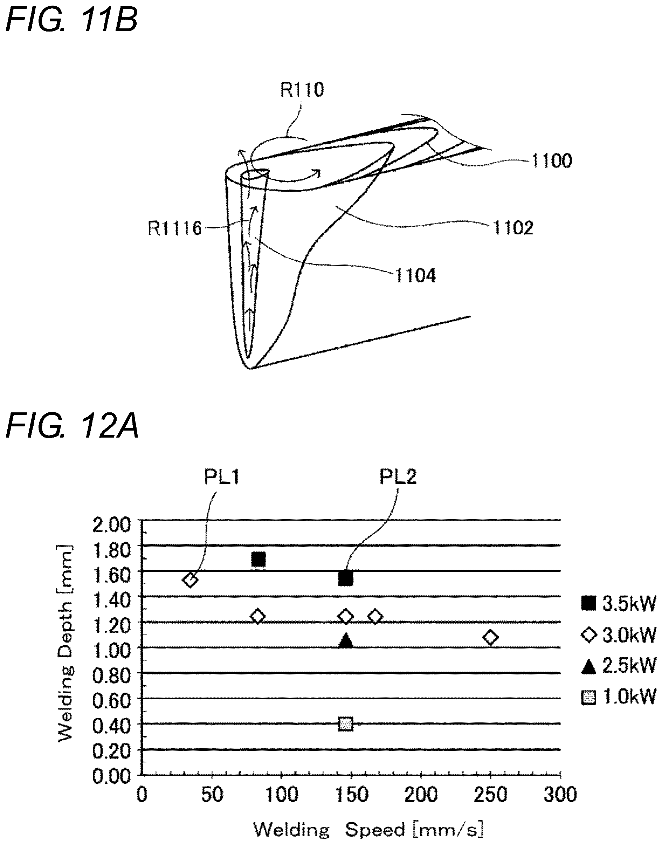

In the case of the infrared laser, since the absorption rate is low as described above, it is common to compensate for the low absorption rate by making the beam diameter relatively small (e.g., ϕ 0.075 mm). This regard also causes the keyhole to become unstable. FIG. 11B is an illustration of a keyhole and the like in the case of using the infrared laser, where 1100 denotes a weld bead, 1102 denotes a molten pool, and 1104 denotes a keyhole. Arrow R1116 schematically indicates a gas release mode. Arrow R110 schematically indicates a state in which the irradiation position of the infrared laser is moved due to the small beam diameter. Thus, in the case of the infrared laser, due to the fact that the absorption rate is low as described above and it is difficult to make the beam diameter relatively large, there is a tendency that a relatively long movement locus (continuous irradiation time) of the irradiation position including meandering is required in order to obtain a necessary melting width.

On the other hand, in the case of the green laser, since the absorption rate is relatively high as described above, it is possible to make the beam diameter relatively large (e.g., ϕ 0.1 mm or more), and it is possible to enlarge and stabilize the keyhole. This improves gas release, and can effectively reduce the occurrence of sputtering or the like. FIG. 11A is an illustration of a keyhole and the like in the case of using the green laser, and the meanings of the reference signs are as described above with reference to FIG. 11B. In the case of the green laser, FIG. 11A visualizes, in an easy-to-understood manner, a state where the keyhole is stabilized due to the expansion of the beam diameter and the gas release is improved. In the case of the green laser, in contrast to the case of the infrared laser, the absorption rate is relatively high and the beam diameter can be made relatively large as described above, and therefore the movement locus (irradiation time) of the irradiation position necessary for obtaining the necessary melting width (see the radial range D2 of the welding target location 90 shown in FIG. 8) can be made relatively short (small).

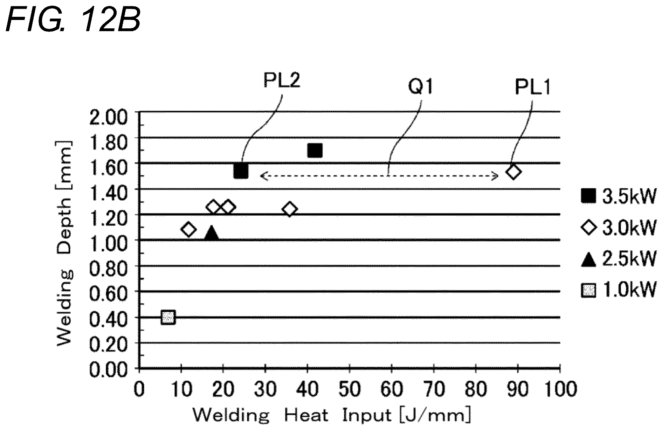

FIGS. 12A and 12B are diagram showing the relationship between laser output and welding depth in a case of a green laser. In FIG. 12A, the horizontal axis represents the welding speed (expressed as "Welding Speed"), and the vertical axis represents the welding depth (expressed as "Welding Depth", and the same applies hereinafter), thereby showing each characteristic in the case of various laser outputs (here, 1.0 kW, 2.5 kW, 3.0 kW, and 3.5 kW). In FIG. 12B, the horizontal axis represents the welding heat input (expressed as "Welding Heat Input", and the same applies hereinafter), and the vertical axis represents the welding depth, thereby showing each characteristic in the case of various laser outputs (here, 1.0 kW, 2.5 kW, 3.0 kW, and 3.5 kW).

FIGS. 12A and 12B indicate that the influence of the laser output is large with respect to the welding depth (penetration depth). On the other hand, when the welding speed is reduced, the welding heat input is increased, but the influence on the welding depth (penetration depth) is relatively small. For example, as shown in FIGS. 12A and 12B, a plot point PL1 when the laser output is 3.0 kW and the welding speed is about 35 mm/s has a welding depth substantially equal to that of a plot point PL2 when the laser output is 3.5 kW and the welding speed is about 150 mm/s although the plot point PL1 has a welding heat input as relatively large as about 90 J/mm (see arrow Q1). This indicates that the higher the laser output is, the higher the heat input efficiency of welding can be achieved.

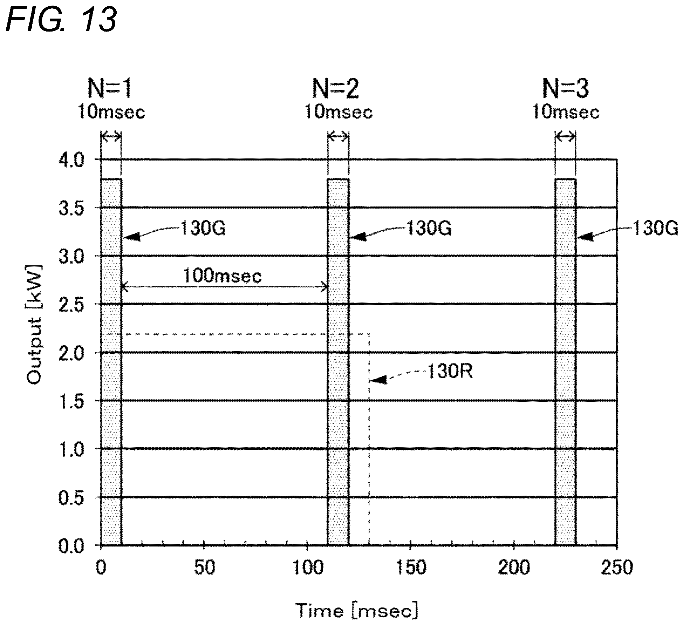

FIG. 13 is an explanatory diagram of a method for welding using a green laser according to the present example. In FIG. 13, the horizontal axis represents time (expressed as "Time", and the same applies hereinafter), and the vertical axis represents laser output (expressed as "Output", and the same applies hereinafter), thereby schematically showing the time-series waveform of the laser output at the time of welding.

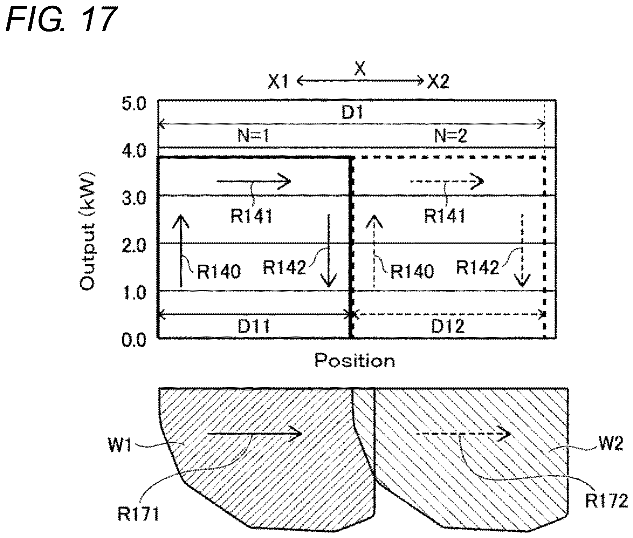

In the present example, as shown in FIG. 13, welding is achieved by pulse irradiation of the green laser with a laser output of 3.8 kW. In FIG. 13, pulse oscillation of the laser oscillator is achieved so that the laser output becomes 3.8 kW only for 10 msec, and after an interval of 100 msec, pulse oscillation of the laser oscillator is achieved again so that the laser output becomes 3.8 kW only for 10 msec. Hereinafter, one pulse irradiation (pulse irradiation for 10 msec) that can be performed by one pulse oscillation in this manner is also referred to as "one pass". In FIG. 13, the irradiation from the first pass (N = 1) to the third pass (N = 3) is indicated by a pulse waveform 130G, and N represents whether it is the N-th pass (hereinafter, the same applies to FIG. 17 and the like). FIG. 13 also shows, for comparison, a pulse waveform 130R related to pulse irradiation in the case of the infrared laser.

Here, in the case of the green laser, the output of the laser oscillator is low (e.g., up to 400 W at the time of continuous irradiation), and it is difficult to obtain a high output (e.g., a high output of a laser output of 3.0 kW or more) necessary for ensuring deep penetration. That is, the green laser is generated through a wavelength conversion crystal such as an oxide single crystal as described above, and therefore the output decreases when passing through the wavelength conversion crystal. For this reason, when continuous irradiation with the laser beam of the green laser is attempted, it is not possible to obtain a high output necessary for ensuring deep penetration.

In this regard, in the present example, as described above, the high output (e.g., the high output of a laser output of 3.0 kW or more) necessary for ensuring deep penetration is secured by pulse irradiation of the green laser. This is because, for example, even when it is only possible to output 400 W at the maximum in the case of continuous irradiation, pulse irradiation makes it possible to achieve a high output of, for example, 3.0 kW or more. In this manner, pulse irradiation is achieved by accumulating continuous energy for increasing peak power and performing pulse oscillation. In the present example, one welding target location is irradiated with a green laser beam generated by a plurality of times of pulse oscillation. That is, in the present example, irradiation of two or more passes with a relatively high laser output (e.g., laser output of 3.0 kW or more) is executed for one welding target location. This makes it easy to ensure deep penetration over the entire welding target location 90 and makes it possible to achieve high-quality welding even when the circumferential range D1 of the welding target location 90 described above is relatively wide.

Note that, in FIG. 13, the interval is a specific value of 100 msec, but the interval is arbitrary and may be minimized within a range in which a necessary high output is secured. In FIG. 13, the laser output is a specific value of 3.8 kW, but the laser output may be appropriately changed within a range in which a necessary welding depth is secured, as long as the laser output is 3.0 kW or more.

FIG. 13 also shows, as a case of the infrared laser, the pulse waveform 130R when continuously irradiated at a laser output of 2.3 kW for a relatively long time of 130 msec. In the case of the infrared laser, unlike the green laser, continuous irradiation is possible at a relatively high laser output (2.3 kW). However, as described above, in the case of the infrared laser, a relatively long movement locus (continuous irradiation time) of the irradiation position including meandering is required in order to obtain a necessary melting width, and in this case, the amount of heat input is about 312 J, which is significantly larger than about 80 J (in the case of two passes), which is the amount of heat input in the case of the green laser shown in FIG. 13.

In this way, according to the present example, as compared with the case of use of the infrared laser, use of the green laser enables welding with a laser beam having a high absorption rate with respect to the material (copper in the present example) of the linear conductor 60 of the coil piece 52. Due to this, the movement locus (time) of the irradiation position necessary for obtaining the necessary melting width (see the radial range D2 of the welding target location 90 shown in FIG. 8) can be made relatively short (small). That is, due to the increased keyhole per pulse oscillation by the relatively large beam diameter, the number of times of pulse oscillation necessary for obtaining the necessary melting width can be made relatively small. As a result, it is possible to secure a necessary joining area between the coil pieces 52 with a relatively small amount of heat input.

According to the present example, by irradiating one welding target location with the green laser of two or more passes, even when the circumferential range D1 of the welding target location 90 is relatively wide, it is easy to ensure deep penetration over the entire welding target location 90, and it is possible to achieve high-quality welding.

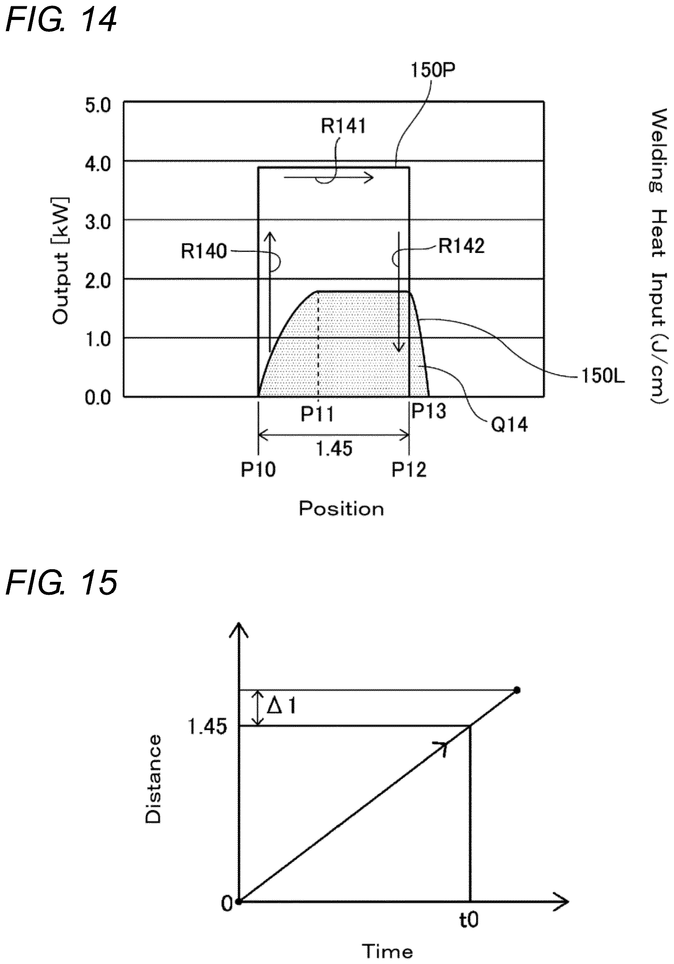

Next, a preferred example of laser irradiation with a green laser will be described with reference to FIGS. 14 to 23.

FIG. 14 is a schematic diagram showing a mode in which the laser output and the welding heat input according to one pass change according to the irradiation position (expressed as "Position" in FIG. 14, and the same applies hereinafter), and schematically showing a change characteristic 150P of the laser output according to the irradiation position and a change characteristic 150L of the welding heat input according to the irradiation position. FIG. 15 is an explanatory diagram of a change mode (in FIG. 15, the movement distance that is the change amount of the irradiation position is expressed as "Distance") of the irradiation position for each pass, the change mode of the irradiation position with respect to time.

In the present example, as an example, it is assumed that in one pass, the change speed of the irradiation position, i.e., the welding speed is constant as shown in FIG. 15. In the pass of about 10 msec, the change amount of the irradiation position (movement distance of the laser beam 110) is preferably in the range of 1 mm to 2 mm, and is about 1.45 mm as an example in the present example. In the present example, as an example, the length of the circumferential range D1 of the welding target location 90 is assumed to be about 2.9 mm. Since the maximum irradiation time per pulse (in this example, about 10 msec) is substantially determined from the irradiation energy of the green laser per pulse, the movement distance of the laser beam 110 per pulse can be further increased as the irradiation energy per pulse increases under the condition where the welding speed is the same.

Specifically, as shown in FIG. 14, one pass starts from a position P10. That is, one pulse oscillation is started from the position P10. In this case, the laser output rises to a predetermined value (3.8 kW as an example in this example) at the position P10 (see arrow R140). Then, the irradiation position is linearly changed from the position P10 to a position P12 at a constant speed. During this period, the laser output is maintained at a predetermined value (3.8 kW as an example in this example) (see arrow R141). When the irradiation position reaches the position P12, the laser output is lowered from a predetermined value (3.8 kW as an example in this example) to 0 (see arrow R142). That is, one pulse oscillation is ended. Even if the irradiation position reaches the position P12, the irradiation position may be changed until the irradiation position further moves to a position P13 separated by a distance Δ1 (e.g., see the distance Δ1 from a time t0 in FIG. 15). During this period, slight welding heat input is generated due to residual laser output (see Q14 in FIG. 14). In the modification, when the irradiation position reaches the position P12 or a position immediately before the position P12 (not illustrated), the change in the irradiation position (change at a constant speed) may be ended.

According to such irradiation mode, the laser output rises to a predetermined value (3.8 kW as an example in this example) at the position P10, but the welding heat input does not increase straight to the maximum value until the actual laser output reaches the predetermined value. Therefore, as indicated by the change characteristic 150L in FIG. 14, the welding heat input gradually increases from the position P10 to a position P11. Then, the laser output is instantaneously lowered to 0 at the position P12, but the welding heat input is maintained at the maximum value until immediately before this. Hereinafter, such irradiation mode in which the laser output is instantaneously lowered to 0 is also referred to as "irradiation mode without downslope" in order to be distinguished from another irradiation mode described later.

Therefore, in the irradiation mode without downslope, the welding heat input at the start position of one pass tends to become significantly smaller than the welding heat input at the end position of the one pass.

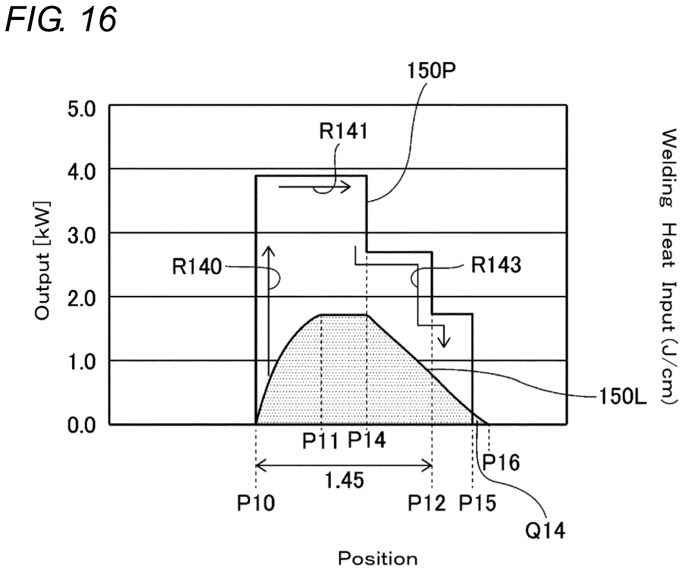

FIG. 16 is an explanatory diagram of another irradiation mode (hereinafter, also referred to as "irradiation mode with downslope" for distinction), and is a schematic diagram showing a mode in which the laser output and the welding heat input related to one pass change according to the irradiation position, similarly to FIG. 14. Similarly to FIG. 14, FIG. 16 schematically shows the change characteristic 150P of the laser output according to the irradiation position and the change characteristic 150L of the welding heat input according to the irradiation position.

Also for the irradiation mode with downslope, similarly to the case of the irradiation mode without downslope described above, it is assumed that in one pass, the change speed of the irradiation position, i.e., the welding speed is constant as shown in FIG. 15.

Specifically, as shown in FIG. 16, one pass is started from the position P10. That is, one pulse oscillation is started from the position P10. In this case, the laser output rises to a predetermined value (3.8 kW as an example in this example) at the position P10 (see arrow R140). Then, the irradiation position is linearly changed from the position P10 to a position P12 at a constant speed. The laser output is maintained at a predetermined value (3.8 kW as an example in this example) while the irradiation position is from the position P10 to a position P14 (see arrow R141). When the irradiation position reaches the position P14, the laser output is lowered stepwise from a predetermined value (3.8 kW as an example in this example) to 0 (see arrow R143). Specifically, the laser output is lowered by one stage when the irradiation position reaches the position P14, the laser output is further lowered by one stage when the irradiation position reaches the position P12, and the laser output is lowered to 0 when the irradiation position reaches a position P15. Even when the irradiation position reaches the position P15, the irradiation position is changed until the irradiation position moves to a position P16 further separated by the distance Δ1. During this period, slight welding heat input is generated due to residual laser output (see Q14 in FIG. 16). The distance Δ1 may be similar to that in the case of the irradiation mode without downslope described above, or may be shorter than that in the case of the irradiation mode without downslope described above. In the modification, when the irradiation position reaches the position P16, the change in the irradiation position (change at a constant speed) may be ended.

According to such irradiation mode (irradiation mode with downslope), the laser output rises to a predetermined value (3.8 kW as an example in this example) at the position P10, but the welding heat input does not increase straight to the maximum value until the actual laser output reaches the predetermined value. Therefore, as shown in FIG. 16, the welding heat input gradually increases from the position P10 to the position P11. The characteristics so far are similar to those in the case of the irradiation mode without downslope described above. Then, the laser output is decreased at the position P14, but the welding heat input is maintained at the maximum value until immediately before this. After the position P14, the laser output is gradually decreased so as to become 0 at the position P15, and therefore the welding heat input is gradually decreased as compared with that in the case of the irradiation mode without downslope described above.

In the example shown in FIG. 16, the laser output is decreased from the predetermined value to 0 through two intermediate values, but the number of intermediate values may be one or may be three or more. The value itself of each intermediate value is also arbitrary, and each intermediate value may be set so that the laser output decreases stepwise from a predetermined value with a constant decrease width, or may be set so that the laser output decreases stepwise from a predetermined value with a varying decrease width. The positions P14 and P12 where stepwise decrease of the laser output occurs and the position P15 where the laser output becomes 0 are arbitrary, and may be adapted so as to obtain a desired characteristic (the change characteristic 150L of the welding heat input according to the irradiation position). For example, when possible, the position P14 (position where downslope starts) shown in FIG. 16 may be coincided with a position 1.45 mm away from the position P10 (position corresponding to the position P12 in the figure).

Here, as described above, in the present example, irradiation of the green laser of two or more passes is executed for one welding target location. At this time, with respect to one welding target location, laser irradiation in the irradiation mode without downslope described above may be performed for all passes, or laser irradiation in the irradiation mode with downslope described above may be performed for all passes. Alternatively, with respect to one welding target location, the irradiation mode without downslope described above and the irradiation mode with downslope described above may be combined in a mode where the irradiation mode is changed for each pass.

Each of the two or more passes with respect to one welding target location may have the same welding direction (change direction of irradiation position), or may have welding directions different from that of some other passes.

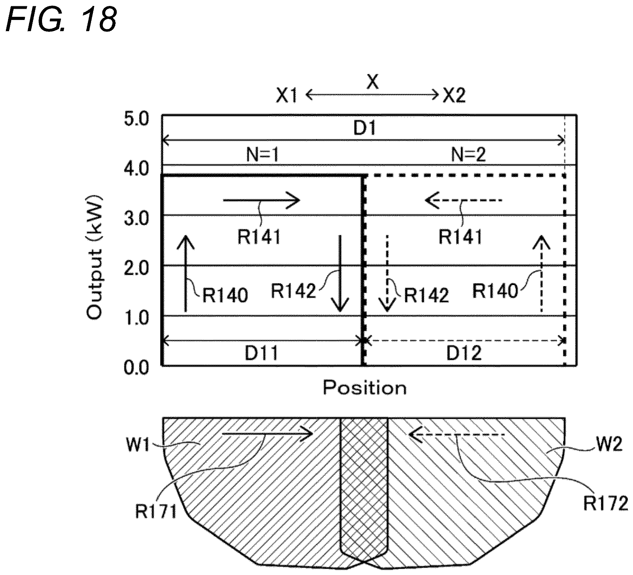

Hereinafter, with reference to FIGS. 17 and 18, a combination example of irradiation modes related to two passes will be described regarding a case where laser irradiation of the two passes is achieved with respect to one welding target location.

FIG. 17 is an explanatory diagram in a case where welding is achieved by two passes having the same welding direction (change direction of irradiation position). The upper side schematically shows a change characteristic of laser output according to the irradiation position, and the lower side schematically shows a change characteristic of welding heat input according to the irradiation position. The change characteristics of the welding heat input according to the irradiation position are shown separately for each pass, and unlike FIGS. 14 and 16, indicates that the lower it goes, the larger the welding heat input is. An area W1 relates to the amount of heat input of the first pass, and an area W2 relates to the amount of heat input of the second pass. In FIG. 17, the welding direction is indicated by arrows R171 and R172 corresponding to the change characteristic of the welding heat input according to the irradiation position. Arrow R171 indicates the welding direction of the first pass, and arrow R172 indicates the welding direction of the second pass. The meanings of arrow R140, arrow R141, and arrow R142 are as described in FIG. 14. In FIG. 17, for the sake of explanation, an X direction and an X1 side (an example of a first side) and an X2 side (an example of a second side) along the X direction (an example of a first direction) are defined.

In the example shown in FIG. 17, both the first pass and the second pass are in the irradiation mode without downslope described above. In the first pass and the second pass, as indicated by arrows R171 and R172, the welding directions (change direction of irradiation position) are the same, the direction where the irradiation position changes from the X1 side to the X2 side along the X direction.

In the example shown in FIG. 17, the first pass is achieved by one pulse oscillation that irradiates a first range D11 with the laser beam 110, and the second pass is achieved by the next one pulse oscillation that irradiates a second range D12 with the laser beam 110. The welding by the first pass and the welding by the second pass cover the entire circumferential range D1 of the welding target location 90 in cooperation.

The first range D11 and the second range D12 include parts different from each other as shown in FIG. 17. Specifically, the first range D11 and the second range D12 are set in a continuous mode without overlapping in the X direction. That is, the position at which the second pass is started (position corresponding to the position P10 in FIG. 14) coincides with the position at which the first pass is substantially ended (position corresponding to the position P12 in FIG. 14).

However, in the modification, the first range D11 and the second range D12 may include parts overlapping each other. For example, the position where the second pass is started (position corresponding to the position P10 in FIG. 14) may be offset to the X1 side with respect to the position where the first pass is substantially ended (position corresponding to the position P12 in FIG. 14). In this case, the end part of the first range D11 on the downstream side (X2 side) in the welding direction overlaps the end part of the second range D12 on the upstream side (X1 side) in the welding direction, but no other part of the first range D11 overlaps the second range D12. The end part of the second range D12 on the upstream side (X1 side) in the welding direction overlaps the end part of the first range D11 on the downstream side (X2 side) in the welding direction, but no other part of the second range D12 overlaps the first range D11. In this case, the position at which the second pass is started (position corresponding to the position P10 in FIG. 14) is preferably set such that the range in which the laser output in the second pass is maintained at a predetermined value (corresponding to the range from the position P11 to the position P12 in FIG. 14) does not significantly overlap, in the X direction, the range in which the laser output in the first pass is maintained at a predetermined value (corresponding to the range from the position P11 to the position P12 in FIG. 14). This can efficiently increase the range that can be covered by two passes (i.e., the range in which the first range and the second range are combined) in the circumferential range D1 of the welding target location 90.

Alternatively, conversely, the position where the second pass is started may be offset slightly to the X2 side with respect to the position where the first pass is substantially ended. In this case, it is possible to maximize a range that can be covered by two passes (i.e., a range in which the first range and the second range are combined) in the circumferential range D1 of the welding target location 90. However, in this case, the position where the second pass is started is set such that the welded portion achieved by the first pass and the welded portion achieved by the second pass are not separated from each other in the X direction (i.e., it is set so that the welding of the joint is appropriately achieved).

In the example shown in FIG. 17, both the first pass and the second pass are in the irradiation mode without downslope described above, but either one or both may be in the irradiation mode with downslope described above.

FIG. 18 is an explanatory diagram in a case where welding is achieved by two passes having different welding directions (change direction of irradiation position). The upper side schematically shows a change characteristic of laser output according to the irradiation position, and the lower side schematically shows a change characteristic of welding heat input according to the irradiation position. The change characteristics of the welding heat input according to the irradiation position are shown separately for each pass, and unlike FIGS. 14 and 16, indicates that the lower it goes, the larger the welding heat input is. An area W1 relates to the amount of heat input of the first pass, and an area W2 relates to the amount of heat input of the second pass. The meanings of arrows R171 and R172 are the same as those in FIG. 17. The meanings of arrow R140, arrow R141, and arrow R142 are as described in FIG. 14.

In the example shown in FIG. 18, similarly to the example shown in FIG. 17, the first pass is achieved by one pulse oscillation that irradiates a first range D11 with the laser beam 110, and the second pass is achieved by the next one pulse oscillation that irradiates a second range D12 with the laser beam 110. The welding by the first pass and the welding by the second pass cover the entire circumferential range D1 of the welding target location 90 in cooperation.

In the example shown in FIG. 18, similarly to the example shown in FIG. 17, both the first pass and the second pass are in the irradiation mode without downslope described above.

However, in the example shown in FIG. 18, the welding directions (change direction of irradiation position) are different between the first pass and the second pass with respect to the example shown in FIG. 17. Specifically, the first pass is a direction in which the irradiation position of the laser beam 110 in the first range D11 is linearly changed from the X1 side to the X2 side along the X direction, whereas the second pass is a direction in which the irradiation position of the laser beam 110 in the second range D12 is linearly changed from the X2 side to the X1 side along the X direction. That is, in both the first pass and the second pass, irradiation is started from the outside toward the center of the circumferential range D1 of the welding target location 90.

In the example shown in FIG. 18, similarly to the example shown in FIG. 17, the first range D11 and the second range D12 include parts different from each other as shown in FIG. 18. Specifically, the first range D11 and the second range D12 are set in a continuous mode without overlapping in the X direction. That is, the position at which the second pass is substantially ended (position corresponding to the position P12 in FIG. 14) coincides with the position at which the first pass is substantially ended (position corresponding to the position P12 in FIG. 14).

However, in the modification, the first range D11 and the second range D12 may include parts overlapping each other. That is, the position where the second pass is substantially ended (position corresponding to the position P12 in FIG. 14) may be slightly offset to the X1 side or may be slightly offset to the X2 side with respect to the position where the first pass is substantially ended (position corresponding to the position P12 in FIG. 14).

Here, in the example shown in FIG. 18, the actual laser output becomes smaller than a predetermined value at both end parts (end parts on the X1 side and the X2 side) of the circumferential range D1 of the welding target location 90. In contrast, in the example shown in FIG. 17, the actual laser output becomes smaller than the predetermined value only at the end part on the X1 side in the circumferential range D1 of the welding target location 90. More specifically, in the example shown in FIG. 18, the welding heat input gradually increases toward the X2 side at the end part on the X1 side, and the welding heat input gradually increases toward the X1 side at the end part on the X2 side of the circumferential range D1 of the welding target location 90. Such characteristic is suitable for a configuration in which the dimension of the welding target object (individual) in the welding depth direction decreases at both end parts in the X direction of the welding target location 90. This is because, when the welding heat input becomes relatively large with respect to a portion in which the dimension of the welding target object (individual) in the welding depth direction is insufficient, the quality of welding is easily impaired due to penetration of the keyhole or the like.

In this regard, in the present example, as shown in FIG. 7, the two tip end parts 40 forming the welding target location 90 have a tapered form (form in which the axially outside end surface 42 is curved). Therefore, the dimension in the welding depth direction (i.e., the dimension along the irradiation direction of the laser beam 110 in the overlapping range when viewed in the radial direction) of the range in which the abutting tip end parts 40 overlap each other is significantly smaller in the dimension L1 of both end parts in the X direction of the welding target location 90 than in the same dimension L0 of the center part in the X direction of the welding target location 90. Therefore, a dimension of the range in which the abutted tip end parts 40 overlap each other, the dimension of the laser beam 110 in the irradiation direction, is smaller on the X1 side in the first range D11 than on the X2 side in the first range D11, and is smaller on the X2 side in the second range D12 than on the X1 side in the second range D12.

Therefore, according to the example shown in FIG. 18, it is possible to form a high-quality welded portion even with respect to the welding target location 90 in the tip end part 40 in a form in which the axially outside end surface 42 is curved by two passes having different welding directions (change direction of irradiation position), the two passes in which irradiation is started from the outside toward the center of the circumferential range D1 of the welding target location 90.

In the example shown in FIG. 18, both the first pass and the second pass are in the irradiation mode without downslope described above, but either one or both may be in the irradiation mode with downslope described above as described later.

In the example shown in FIG. 18 (the same applies to the example shown in FIG. 17), the entire circumferential range D1 of the welding target location 90 is covered with two passes, but may be covered with three or more passes.

In general, welding is performed in an environment in which a shielding gas (e.g., nitrogen gas) is not used or in an environment in which a shielding gas is used. In an environment in which the shielding gas is not used, a solidified part of a portion of the tip end part 40 dissolved by the laser beam 110 is combined with the air component, and volume expansion occurs. That is, when oxygen in the atmosphere penetrates into the molten pool and solidifies, volume expansion occurs due to oxides and the like. When such volume expansion occurs, the size of the motor 1 tends to increase accordingly (when resin molding described later is performed, the thickness of the resin portion tends to increase and the size of the motor 1 tends to increase). Note that such volume expansion tends to easily occur at a position (position corresponding to the position P12 in FIG. 14) where the irradiation in the pass in the irradiation mode without downslope described above is substantially ended. This is considered to be because the decrease in laser output becomes steep at the position where the irradiation is substantially ended, and the solidification speed becomes faster (because oxygen is therefore easily confined).

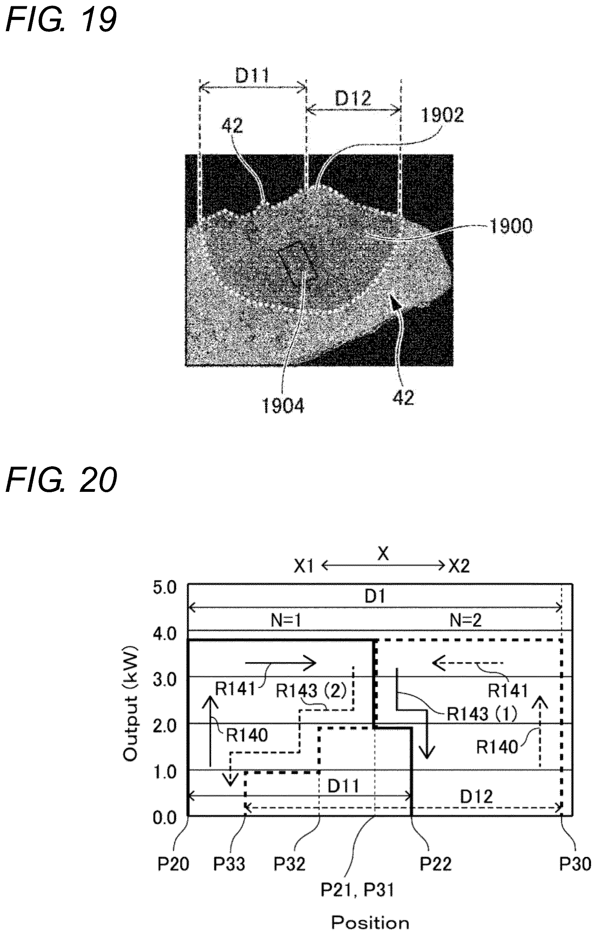

FIG. 19 is an explanatory diagram of a protrusion and the like caused by volume expansion, and is a view showing a cross section of a welded portion in a case where welding is achieved by the two passes shown in FIG. 18. FIG. 19 illustrates one of the abutted two tip end parts 40, and a region 1900 surrounded by a dotted line is a welded portion (representing a welding depth). FIG. 19 shows the first range D11 related to the first pass and the second range D12 related to the second pass together.

As indicated by FIG. 19, when welding is achieved by the two passes shown in FIG. 18, unevenness is generated at the welding target location 90 on the axially outside end surface 42. In particular, a relatively large protrusion 1902 (protrusion protruding outward in the axial direction) is generated at a position where the irradiation in the second pass according to the irradiation mode without downslope described above is substantially ended. A blowhole 1904 occurs at a boundary part (joint) between the first pass and the second pass.

Therefore, in the present example, preferably, such protrusion and blowhole can be reduced using the irradiation mode with downslope described above. Hereinafter, such configuration will be described with reference to FIGS. 20 to 23.

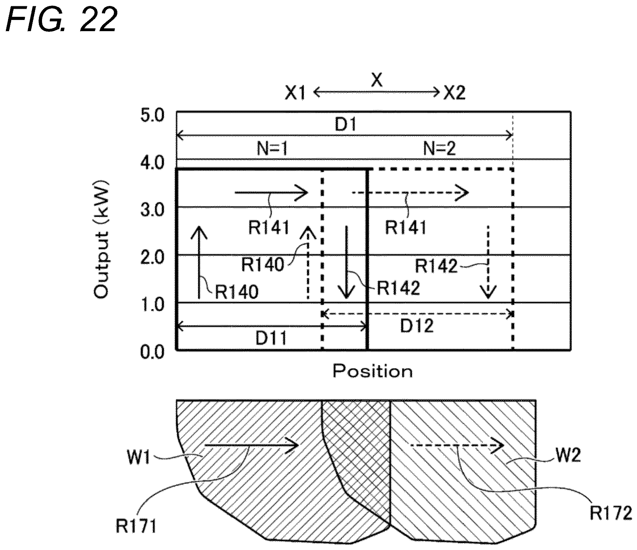

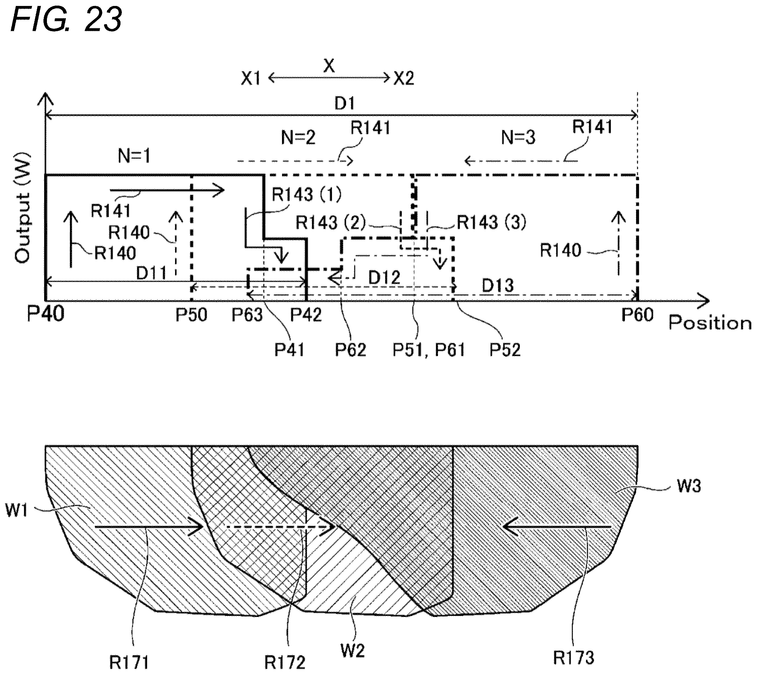

FIG. 20 is an explanatory diagram of a method for welding capable of reducing a protrusion and a blowhole, and is a diagram schematically showing a change characteristic of laser output according to an irradiation position for each of two passes. The way of viewing FIG. 20 (the same applies to FIGS. 22 and 23 described later) is similar to that of FIG. 17 described above. In FIG. 20, the meanings of arrows R140, R141, and R143 are as described in FIG. 16. For arrow R143, (1) is given to the first pass, and (2) is given to the second pass.

In the example shown in FIG. 20, similarly to the example shown in FIG. 18, the first pass is achieved by one pulse oscillation (example of first pulse oscillation) that irradiates a first range D11 with the laser beam 110, and the second pass is achieved by the next one pulse oscillation (example of second pulse oscillation) that irradiates a second range D12 with the laser beam 110. The welding by the first pass and the welding by the second pass cover the entire circumferential range D1 of the welding target location 90 in cooperation.

In the example shown in FIG. 20, similarly to the example shown in FIG. 18, the welding directions (change direction of irradiation position) are different between the first pass and the second pass. That is, in both the first pass and the second pass, irradiation is started from the outside toward the center of the circumferential range D1 of the welding target location 90.

However, in the example shown in FIG. 20, unlike the example shown in FIG. 18, both the first pass and the second pass are in the irradiation mode with downslope described above.

Specifically, in the first pass, the laser output rises to a predetermined value (3.8 kW as an example in this example) at a position P20, which is an end point on the X1 side of the first range D11 (see arrow R140), and a predetermined value (3.8 kW as an example in this example) is maintained up to a position P21 on the X2 side by a predetermined distance d1 (not illustrated) with respect to the position P20 (see arrow R141). Then, the laser output is lowered to a first intermediate value (2.0 kW as an example in this example) at the position P21, and then the laser output is lowered to 0 at a position P22 on the X2 side by a predetermined distance d2 (not illustrated) with respect to the position P21 (see arrow R143(1)).

In the second pass, the laser output rises to a predetermined value (3.8 kW as an example in this example) at a position P30, which is an end point on the X2 side of the second range D12 (see arrow R140), and the predetermined value (3.8 kW as an example in this example) is maintained up to a position P31 on the X1 side by a predetermined distance d3 (not illustrated) with respect to the position P30 (see arrow R141). Then, the laser output is lowered to the first intermediate value (2.0 kW as an example in this example) at the position P31, then the laser output is lowered to a second intermediate value (1.0 kW as an example in this example) at a position P32 on the X1 side by a predetermined distance d4 (not illustrated) with respect to the position P31, and then the laser output is lowered to 0 at a position P33 on the X1 side by a predetermined distance d5 (not illustrated) with respect to the position P32 (see arrow R143(2)).

In the example shown in FIG. 20, the position P21 at which the stepwise decrease of the laser output related to the first pass is started and the position P31 at which the stepwise decrease of the laser output related to the second pass is started coincide with each other, but may be separated in the X direction. For example, the position P31 may be offset to the X1 side or may be offset to the X2 side with respect to the position P21.

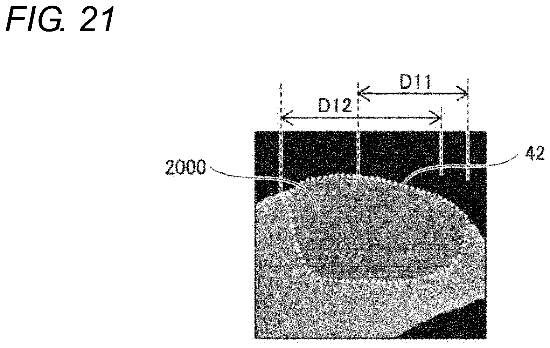

FIG. 21 is a diagram showing a cross section of the welded portion when welding is achieved by the two passes shown in FIG. 20 as a comparison with FIG. 19. FIG. 21 illustrates one of the abutted two tip end parts 40, and a region 2000 surrounded by a dotted line is a welded portion. FIG. 21 shows the first range D11 related to the first pass and the second range D12 related to the second pass together.

As indicated by FIG. 21, when welding is achieved by the two passes shown in FIG. 20, a relatively smooth curved surface is maintained even at the welding target location 90 on the axially outside end surface 42. That is, in a case where the welding is achieved by the two passes shown in FIG. 20, the unevenness as shown in FIG. 19 is reduced, and particularly, the relatively large protrusion 1902 (see FIG. 19) has not occurred. This is considered to be because the protrusion (protrusion such as the protrusion 1902 shown in FIG. 19) likely to occur in the vicinity of the end position of the first pass is leveled by the irradiation from the vicinity of the position P31 to the position P33 of the second pass. That is, it is considered to be because the protrusion solidified once in the first pass is melted again by the irradiation from the vicinity of the position P31 to the position P33 of the second pass, and thus the protrusion is leveled. In the present example, since the green laser is used as described above, the absorption rate is high as described above, and the protrusion can be melted even with a relatively low laser output such as the first intermediate value. This is in contrast to the infrared laser in which there is a high possibility that the protrusion cannot be melted with such a relatively low laser output.

As indicated by FIG. 21, when welding is achieved by the two passes shown in FIG. 20, the blowhole 1904 as shown in FIG. 19 does not occur. This is considered to be because the end part range on the X2 side of the first range D11 (range in the vicinity of the end position of the first pass) is melted again by the irradiation from the vicinity of the position P31 to the position P33 of the second pass.

In this way, according to the example shown in FIG. 20, since the second range D12 related to the second pass includes the vicinity of the end position of irradiation in the first range D11 related to the first pass, it is possible to melt the protrusion caused by the solidified portion that is likely to occur in the vicinity of the end position of irradiation in the first range D11 related to the first pass, and as a result, it is possible to reduce the height of the protrusion. This can reduce the size of the motor 1 in the axial direction.

According to the example shown in FIG. 20, of the second range D12 related to the second pass, in a part overlapping the vicinity of the end position of irradiation in the first range D11 related to the first pass (part from the vicinity of the position P31 to the position P33 of the second pass), the laser output is gradually lowered. This can melt the protrusion described above in a mode where bubbles and the like are hardly generated by an intermediate value (first intermediate value and the like) lower than a predetermined value (3.8 kW as an example in this example). Due to this, even in an environment in which the shielding gas is not used, it is possible to smoothly level the protrusion described above while reducing the occurrence of a protrusion that is caused by the second pass itself and can similarly occur in the vicinity of the end position of the second pass.

In the example shown in FIG. 20, the first pass is in the irradiation mode with downslope described above, but may be in the irradiation mode without downslope described above. The first pass is in an irradiation mode with downslope via one intermediate value, but may be in an irradiation mode with downslope via two or more intermediate values.

In the example shown in FIG. 20, the second pass is in an irradiation mode with downslope via two intermediate values, but may be in an irradiation mode with downslope via one or three or more intermediate values.

In the example shown in FIG. 20, the second pass is in the irradiation mode with downslope described above, but may be in the irradiation mode without downslope described above. In this case, as shown in FIG. 22, similarly to the example shown in FIG. 17, the welding directions (see arrows R171 and R172) of the first pass and the second pass may be the same, and the position where the second pass is started (position corresponding to the position P10 in FIG. 14) may be offset to the X1 side with respect to the position where the first pass is substantially ended (position corresponding to the position P12 in FIG. 14). In this case, the part overlapping the vicinity of the end position of irradiation in the first range D11 related to the first pass of the second range D12 related to the second pass is a stage before the actual laser output reaches a predetermined value (3.8 kW as an example in this example). This can melt the protrusion described above in a mode where bubbles and the like are hardly generated by the laser output before reaching a predetermined value (3.8 kW as an example in this example). Due to this, similarly to the example shown in FIG. 20, it is possible to smoothly level the protrusion described above.

In the modification shown in FIG. 22, the first pass and the second pass are in the irradiation mode without downslope, but at least one of the first pass and the second pass may be in the irradiation mode with downslope.

In the example shown in FIG. 20, the entire circumferential range D1 of the welding target location 90 is covered with two passes, but may be covered with three or more passes as in the example shown in FIG. 23 described below.

FIG. 23 is an explanatory diagram of another method for welding capable of reducing a protrusion and a blowhole, and is a diagram schematically showing a change characteristic of laser output according to the irradiation position for each of three passes. An area W3 relates to the amount of heat input of the third pass. For arrow R143, (1) is given to the first pass, (2) is given to the second pass, and (3) is given to the third pass. Arrow R172 indicates the welding direction of the third pass.

In the example shown in FIG. 23, the welding direction (change direction of irradiation position) is the same in the first pass and the second pass, and is a direction from the X1 side toward the X2 side. On the other hand, the welding directions (direction of change in irradiation position) are different between the second pass and the third pass. That is, the third pass is a direction from the X2 side toward the X1 side.

In the example shown in FIG. 23, the first pass to the third pass are all in the irradiation mode with downslope described above. The relationship between the first pass and the second pass is substantially the same as the relationship between the first pass and the second pass shown in FIG. 22 described above except that both the first pass and the second pass are in the irradiation mode with downslope. The relationship between the second pass and the third pass is substantially the same as the relationship between the first pass and the second pass shown in FIG. 20 described above.

Specifically, in the first pass, as indicated by a solid line characteristic in FIG. 23, the laser output rises to a predetermined value (3.8 kW as an example in this example) at a position P40, which is an end point on the X1 side of the first range D11 (see arrow R140), and the predetermined value (3.8 kW as an example in this example) is maintained up to a position P41 on the X2 side with respect to the position P40 (see arrow R141). Then, the laser output is lowered to the first intermediate value (2.0 kW as an example in this example) at the position P41, and then the laser output is lowered to 0 at a position P42 on the X2 side with respect to the position P41 (see arrow R143(1)).

In the second pass, as indicated by a broken line characteristic in FIG. 23, the laser output rises to a predetermined value (3.8 kW as an example in this example) at a position P50, which is an end point on the X1 side of the second range D12, the position P50 on the X1 side relative to the position P41 (see arrow R140), and the predetermined value (3.8 kW as an example in this example) is maintained up to a position P51 on the X2 side with respect to the position P50 (see arrow R141). Then, the laser output is lowered to the first intermediate value (2.0 kW as an example in this example) at the position P51, and then the laser output is lowered to 0 at a position P52 on the X2 side with respect to the position P51 (see arrow R143(2)).

In the third pass, as indicated by a one-dot chain line characteristic in FIG. 23, the laser output rises to a predetermined value (3.8 kW as an example in this example) at a position P60, which is an end point on the X2 side of a third range D13 (see arrow R140), and the predetermined value (3.8 kW as an example in this example) is maintained up to a position P61 on the X1 side with respect to the position P60 (see arrow R141). Then, the laser output is lowered to the first intermediate value (2.0 kW as an example in this example) at the position P61, then the laser output is lowered to the second intermediate value (1.0 kW as an example in this example) at a position P62 on the X1 side with respect to the position P61, and then the laser output is lowered to 0 at a position P63 on the X1 side with respect to the position P62 (see arrow R143(3)).

Also in the example shown in FIG. 23, according to the same principle as in the example shown in FIG. 22, the protrusion caused by the solidified portion that is likely to occur in the vicinity of the end position of irradiation in the first range D11 related to the first pass can be melted in the second pass, and according to the same principle as in the example shown in FIG. 20, the protrusion caused by the solidified portion that is likely to occur in the vicinity of the end position of irradiation in the second range D12 related to the second pass can be melted in the third pass. This can reduce the protrusion that can occur in the welded portion, and can reduce the size of the motor 1 in the axial direction.

According to the example shown in FIG. 23, similarly to the example shown in FIG. 18 described above, the actual laser output becomes smaller than a predetermined value at both end parts (end parts on the X1 side and the X2 side) of the circumferential range D1 of the welding target location 90. Such characteristic is suitable for a configuration in which the dimension of the welding target object (individual) in the welding depth direction decreases at both end parts in the X direction of the welding target location 90.

In this regard, in the present example, as shown in FIG. 7, the two tip end parts 40 forming the welding target location 90 have a tapered form (form in which the axially outside end surface 42 is curved). Therefore, a dimension of the range in which the abutted tip end parts 40 overlap each other, the dimension of the laser beam 110 in the irradiation direction, is smaller on the X1 side in the first range D11 than on the X2 side in the first range D11, and is smaller on the X2 side in the third range D13 than on the X1 side in the third range D13. Therefore, according to the example shown in FIG. 23, similarly to the example shown in FIG. 18 described above, it is possible to form a high-quality welded portion even with respect to the welding target location 90 in the tip end part 40 in a form in which the axially outside end surface 42 is curved by the welding regarding the two passes (two passes of the first pass and the third pass) having different welding directions (change direction of irradiation position), the two passes in which irradiation is started from the outside toward the center of the circumferential range D1 of the welding target location 90.

In the example shown in FIG. 23, the position P51 at which the stepwise decrease of the laser output related to the second pass is started and the position P61 at which the stepwise decrease of the laser output related to the third pass is started coincide with each other, but may be separated in the X direction. For example, the position P61 may be offset to the X1 side or may be offset to the X2 side with respect to the position P51.

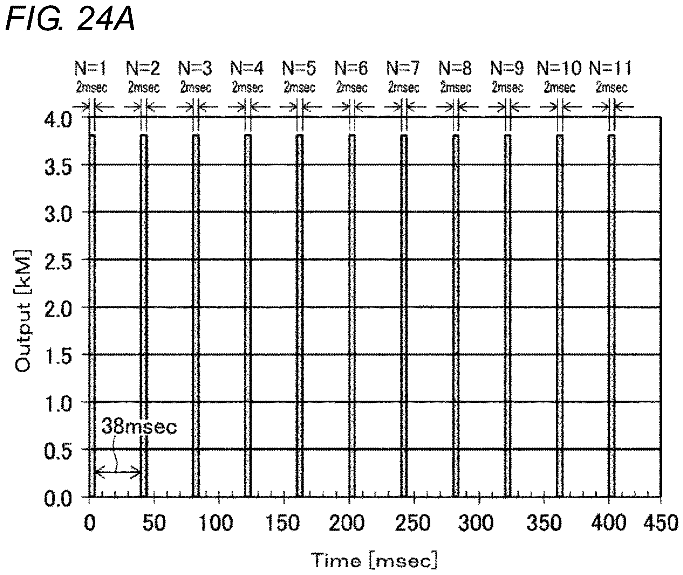

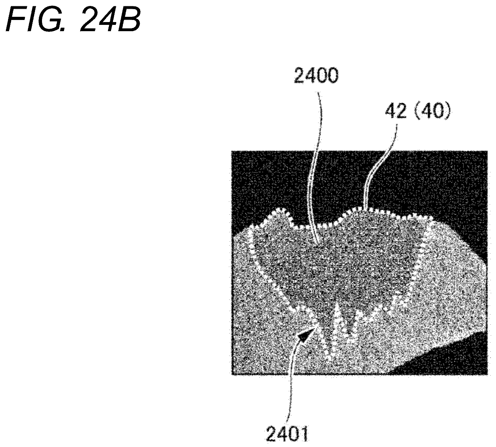

Next, with reference to FIGS. 24A and 24B, a further effect of the present example will be described in comparison with the comparative example.

FIG. 24A is an explanatory diagram of a method for welding using a green laser according to the comparative example. In FIG. 24A, the horizontal axis represents time, and the vertical axis represents laser output, thereby schematically showing the time-series waveform of the laser output at the time of welding.

In the comparative example, as shown in FIG. 24A, welding is achieved by pulse irradiation of the green laser with a laser output of 3.8 kW. In FIG. 24A, pulse oscillation of the laser oscillator is achieved so that the laser output becomes 3.8 kW only for 2 msec, and after an interval of 38 msec, pulse oscillation of the laser oscillator is achieved again so that the laser output becomes 3.8 kW only for 2 msec.

On the other hand, in the present example, as described above with reference to FIG. 13, pulse oscillation of the laser oscillator is achieved so that the laser output becomes 3.8 kW only for 10 msec, and after an interval of 100 msec, pulse oscillation of the laser oscillator is achieved again so that the laser output becomes 3.8 kW only for 10 msec.

In the comparative example, unlike the present example, the irradiation position of the laser beam for each pass is fixed. That is, in the present example, as described above, the irradiation position of the laser beam 110 is linearly changed (moved) at a constant speed during each pulse oscillation, whereas in the comparative example, the irradiation position of the laser beam is not moved during each pulse oscillation.

FIG. 24B is a diagram showing a cross section of the welded portion when welding is achieved by the comparative example. FIG. 24B illustrates one of the abutted two tip end parts 40, and a region 2400 surrounded by a dotted line is a welded portion (representing a welding depth). In the comparative example, irradiation of 11 passes is achieved for one welding target location 90.

As indicated by FIG. 24B, when welding is achieved by 11 passes by the comparative example, unevenness is generated at the welding target location 90 on the axially outside end surface 42. As indicated by FIG. 24B, when welding is achieved by the 11 passes by the comparative example, sharp unevenness occurs in a welding bottom part 2401. Such unevenness in the welding bottom part 2401 is disadvantageous in that stress concentration is likely to occur due to the force received from the jig at the time of welding, leading to a decrease in fatigue strength and the like.

In this regard, according to the present example, as shown in FIG. 19 described above, the welding bottom part is smooth, and it is possible to reduce inconvenience (decrease in fatigue strength and the like) that occurs in the comparative example. In this way, according to the present example, by linearly moving the irradiation position of the laser beam 110 at an appropriate moving speed (welding speed) while ensuring the laser output that can give the necessary penetration depth with respect to the welding target location 90, it is possible to achieve high-quality welding while ensuring the welding cross-sectional area necessary for the product function.

According to the present example, as compared with the comparative example, the overlapping range for each pass is reduced by the number of times of pulse oscillation per one welding target location 90, and the welding cross-sectional area necessary for product function can be efficiently secured. In other words, it is possible to shorten the welding time required to secure the welding cross-sectional area necessary for the product function. For example, in the comparative example, as shown in FIG. 24B, the welding time is about 440 msec by 11 times of pulse oscillation, whereas in the present example, as shown in FIG. 13 described above, the welding time is about 220 msec (time until immediately before the third pass) in a case of using 2 times of pulse oscillation.

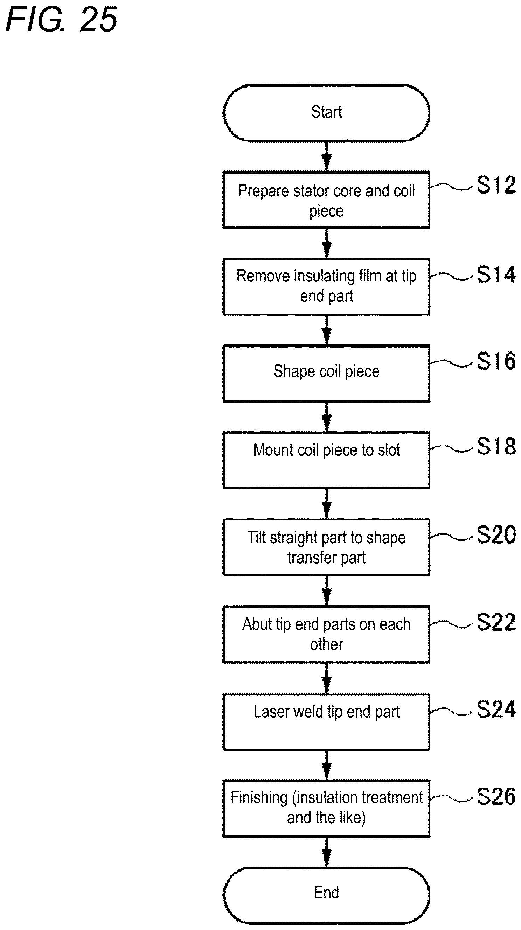

Next, the flow of manufacturing the stator 21 will be outlined with reference to FIG. 25. FIG. 25 is a flowchart schematically showing the flow of manufacturing the stator 21.

The method for manufacturing the stator 21 first includes a process (S12) of preparing the stator core 22 and preparing the straight coil piece 52 (the coil piece 52 before shaping) for forming the stator coil 24.

Subsequently, the method for manufacturing the stator 21 includes a removal process (S14) of removing the insulating film 62 at the tip end part 40 (starting end and terminal end) of the coil piece 52. The method for removing this insulating film 62 is arbitrary, but for example, the insulating film 62 may be mechanically removed using a blade, or may be chemically removed by etching or the like. The insulating film 62 may be thermally removed using a laser.

In order to join the coil pieces 52 to each other, at least the insulating film 62 of the surface to be actually joined in the tip end part 40 only needs to be removed, and the insulating film 62 of the other surfaces (the other surface of the back surface or the front surface, and the side surface) may remain.

Subsequently, the method for manufacturing the stator 21 includes, after the removal process, a shaping process (S16) of bending the straight coil piece 52 using a mold or the like and shaping the coil piece. For example, the coil piece 52 is shaped into a substantially U shape having the pair of straight parts 50 and the coupling part 54 that couples the pair of straight parts 50 as shown in FIG. 6. Note that the order of step S16 and step S14 may be reversed.

Subsequently, the method for manufacturing the stator 21 includes, after the shaping process, a mounting process (S18) of inserting the coil piece 52 into the slot 220 of the stator core 22. An insertion process is completed at the stage when the insertion of all the coil pieces 52 is completed.

Subsequently, the method for manufacturing the stator 21 includes, after the insertion process, a deformation process (S20) of tilting in the circumferential direction a part of the straight part 50 that protrudes from each slot 220 using a dedicated jig. Due to this, the straight part 50 becomes a leg part 56 extending in the axial direction in the slot 220 and a transfer part 58 extending in the circumferential direction on one axial end side.

Subsequently, the method for manufacturing the stator 21 includes, after the deformation process, a process (S22) of abutting the tip end part 40 of the transfer part 58 of one coil piece 52 extending to the circumferential first side (e.g., clockwise orientation) and the tip end part 40 of the transfer part 58 of an other one coil piece 52 extending to the circumferential second side (e.g., anticlockwise direction) on each other. In this case, for example, a plurality of sets of the tip end parts 40 are maintained in a state of abutting on one another using a jig (not illustrated).

Subsequently, a joining process (S24) of joining the plurality of sets of tip end parts 40 by sequentially irradiating each of the plurality of welding target locations with the laser beam 110 in a state where the plurality of sets of tip end parts 40 abut on one another is included. In the present example, as described above, each of the two tip end parts 40 is joined by welding. Detail of the joining process (joining process by laser welding) is as described above. Welding is performed every two tip end parts 40, and when all sets of two tip end parts 40 have been welded, the joining process ends.

Subsequently, the method for manufacturing the stator 21 includes a finishing process (S26) after the joining process. The finishing process may include a process of performing insulation treatment on the coil ends 220A and 220B formed by assembling the coil pieces 52 as described above, for example. The insulation treatment may be a treatment of molding resin in a mode of sealing the entire coil ends 220A and 220B, or a treatment of applying varnish or the like.

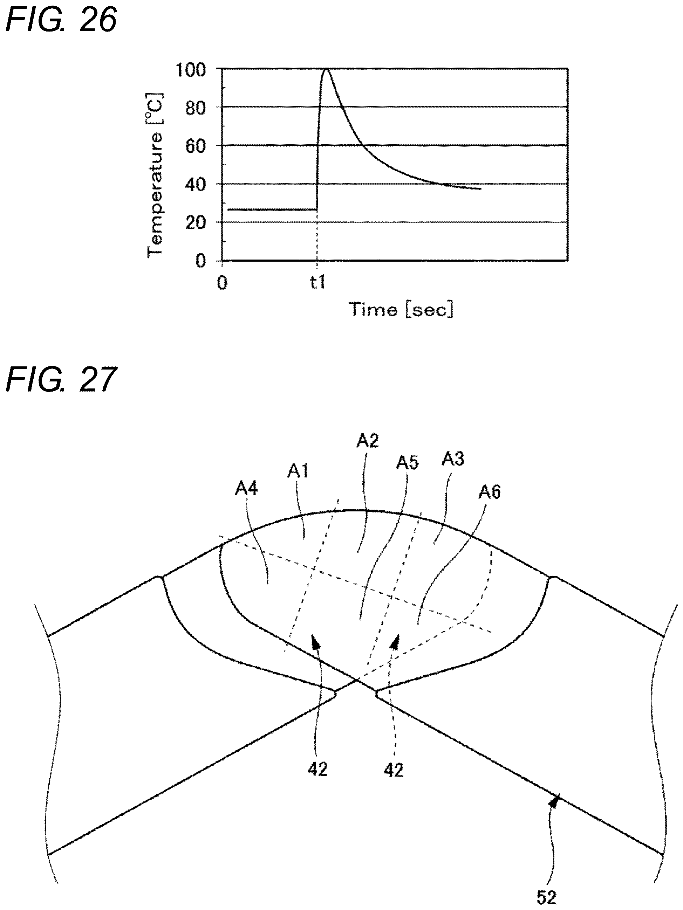

Next, the influence of welding heat by the green laser will be described with reference to FIG. 26.

FIG. 26 is a diagram showing a measurement result of a temperature history at the time of welding by the green laser. In FIG. 26, the horizontal axis represents time, and the vertical axis represents temperature (expressed as "Temperature" in FIG. 26), thereby showing the temperature history at the time of welding with the green laser. The temperature history shown in FIG. 26 is based on the result of measuring the temperature in the vicinity of the welding target location 90 on the axially outside end surface 42 with a thermocouple. In FIG. 26, a time point t1 represents an irradiation start time point.

Since heat is generally generated during welding, the insulating film 62 of the coil piece 52 may be damaged (carbonized) by the heat generated by welding. Here, since it becomes difficult to apply an insulating material (e.g., resin, varnish, or the like) onto the damaged (carbonized) insulating film 62, there is a possibility that the insulating performance of the stator coil 24 after welding deteriorates.

In this regard, according to the present example, as shown in FIG. 26, the maximum temperature during welding remains about 99°C. This is because the amount of heat input is significantly reduced as described above by using the green laser. About 99°C is significantly lower than 180°C, which is a temperature at which carbonization of enamel occurs. Thus, according to the present example, use of the green laser can make damage of the insulating film 62 of the coil piece 52 less likely to occur. Therefore, according to the present example, in the removal process (S14) of removing the insulating film 62 (see FIG. 25), it is possible to remove only the insulating film 62 on the surface of the tip end part 40 to be joined and leave the insulating film 62 on the other surfaces.

Next, foreign matter resistance related to welding by the green laser will be described with reference to FIG. 27.

FIG. 27 is an explanatory diagram of a test for verifying foreign matter resistance. Here, as shown in FIG. 27, the overlapping range of the abutted tip end parts 40 was divided into six, small pieces of enamel coating forming the insulating film 62 were held in any of six regions A1 to A6 obtained by the division (held between the tip end parts 40 in the radial direction), and welding was performed by a green laser. Then, welding with a green laser was performed with varying the region where the small pieces are held and the size of the small pieces, and the foreign matter resistance was evaluated. As a result, for example, in the region A1 and the region A3, even when a small piece having a size of 0.7 mm × 0.7 mm was held, a defect such as a hole was not generated on the surface of the weld bead. Similarly, in the region A2, even when a small piece having a size of 1.0 mm × 1.0 mm was held, a defect such as a hole was not generated on the surface of the weld bead. The same applied to the other regions. On the other hand, in the case of welding by an infrared laser, when a small piece having a size of 0.2 mm × 0.2 mm was held, a hole was generated on the surface of the weld bead, and the high level of foreign matter resistance in welding by the green laser was successfully confirmed.

While each example has been described in detail above, the present invention is not limited to a specific example, and various modifications and changes can be made within the scope described in the claims. All or a plurality of the components of the above-described examples can be combined.

For example, in the above-described examples, the stator coil 24 is formed by the plurality of coil pieces 52 in the form of segment coils, but the present invention is not limited thereto. For example, the stator coil 24 may be in the form of a concentrated winding coil wound (shaped) around the teeth 22B a plurality of times.

### REFERENCE SIGNS LIST

1: Motor (rotary electric machine), 24: Stator coil, 52: Coil piece, 40: Tip end part, 401: Abutment surface, 110: Laser beam, and 90: Welding target location

## Claims

1. A method for manufacturing a stator for a rotary electric machine comprising:
a process of abutting, on each other, tip end parts of one coil piece and an other one coil piece for forming a stator coil of a rotary electric machine; and
a welding process of irradiating a welding target location regarding the tip end part having been abutted with a laser beam having a wavelength of 0.6 µm or less,
wherein in the welding process, the laser beam is generated for every pulse oscillation in a laser oscillator in a mode of having a laser output of 3.0 kW or more, and
in at least a part of a period during one pulse oscillation, the laser beam is moved so that an irradiation position changes linearly parallel to an abutment surface of the tip end part.

2. The method for manufacturing a stator for a rotary electric machine according to claim 1, wherein
in the welding process, the one welding target location is irradiated with the laser beam by two or more times of pulse oscillation, and
the one pulse oscillation constitutes the two or more times of pulse oscillation.

3. The method for manufacturing a stator for a rotary electric machine according to claim 1 or 2, wherein the pulse oscillation is performed in a mode where energy accumulated using a period before an oscillation period of the pulse oscillation is brought together in the oscillation period.

4. The method for manufacturing a stator for a rotary electric machine according to claim 2, wherein
the two or more times of pulse oscillation include a first pulse oscillation for irradiating a first range of the welding target location with the laser beam and a second pulse oscillation for irradiating a second range of the welding target location with the laser beam,
the first range and the second range partially overlap, and
a moving direction of an irradiation position of the laser beam during the first pulse oscillation and a moving direction of an irradiation position of the laser beam during the second pulse oscillation oppose each other.
